# EUROPÄISCHE PATENTSCHRIFT

(11) **EP 1 618 348 B1**
(45) Veröffentlichungstag und Bekanntmachung des Hinweises auf die Patenterteilung: **13.06.2007**
(21) Anmeldenummer: 04723210.3
(22) Anmeldetag: 25.03.2004
(51) Int. Cl.: F27B 17/02, A61C 13/20

(54) **DENTALTECHNIKOFEN ZUR HERSTELLUNG VON PRESSKERAMIK**
DENTAL FURNACE FOR PRODUCING COMPACTED CERAMICS
FOUR DE TECHNIQUE DENTAIRE POUR PRODUIRE DE LA CERAMIQUE COMPACTEE

(30) Priorität: 25.03.2003 DE 10313405
(43) Veröffentlichungstag der Anmeldung: 25.01.2006
(73) Patentinhaber: Zubler Gerätebau GmbH, 89081 Ulm-Jungingen (DE)
(72) Erfinder: ZUBLER, Kurt, 89233 Neu-Ulm (DE)
(74) Vertreter: Fiener, Josef
(86) Internationale Anmeldenummer: PCT/EP2004/003144
(87) Internationale Veröffentlichungsnummer: WO 2004/085943

(56) Entgegenhaltungen:
- DE-A- 19 844 136
- DE-A- 19 905 666

## Beschreibung

Die Erfindung betrifft einen Dentaltechnikofen zur Herstellung von Presskeramik mit den oberbegrifflichen Merkmalen des Patentanspruches 1.

Derartige Dentaltechnikofen wie Z.B. in DE 198 44 136 werden bei der Herstellung von Presskeramiken in Zahntechniklabors eingesetzt, wobei ein vorbereitetes Werkstück in Form einer Muffel, beispielsweise ein Modell für eine Krone in eine Brennkammer eingeführt wird, um dort auf z.B. 850° C erhitzt zu werden, bevor die Keramikmasse mit einem pneumatisch angetriebenen Stößel in den Muffelhohlraum eingepresst wird. Der Pneumatikzylinder zum Antrieb des Stößels sitzt hierbei auf einer Brennkammer mit einer elektrischen Heizwicklung. Die Kammer in der Brennkammer wird dabei meist unter Vakuum gesetzt, nachdem die Einführöffnung mittels einer Bodenplatte verschlossen wird. Der Pneumatikzylinder wird dabei mit einem Druck angetrieben, der durch einen Druckminderer vom Labordruck (z.B. 10 bar) per Hand auf beispielsweise 5 bar herabgesetzt wird, um die Muffel in der Brennkammer beim Pressvorgang nicht zu überlasten, zumal diese Einbettmassen im Bereich dünner Wandstärken relativ bruchempfindlich sind.

Daher wurde auch schon versucht, die Muffelkonstruktion durch größere Wandstärken zu verbessern, wobei jedoch im allgemeinen die Durchwärmung verschlechtert wurde, so dass dann die Presszeiten, Haltezeiten oder andere Parameter verändert werden mussten. Zudem werden zunehmend unterschiedliche Muffelgrössen eingesetzt, um beispielsweise mehrere Zähne gleichzeitig pressen zu können. Dadurch wird jedoch im allgemeinen die Wandstärke der Muffel geschwächt, so dass der Dentaltechniker den Pressdruck am Druckminderer manuell an diese Gegebenheiten anpassen müsste. Dies wird jedoch oft vergessen oder nur anhand grober Richtwerte durchgeführt, so dass es zu schlechten Arbeitsergebnissen oder gar Muffelplatzern kommen kann.

Aufgabe der vorliegenden Erfindung ist es daher, einen Dentaltechnikofen zur Herstellung von Presskeramik zu schaffen, mit dem ein sicherer und effizienter Betrieb ermöglicht wird.

Diese Aufgabe wird gelöst durch eine Dentaltechnikofen nach Anspruch 1. Vorteilhafte Ausgestaltungen sind Gegenstand der Unteransprüche.

Der erfindungsgemäße Dentaltechnikofen weist mehrere Druckminderer mit unterschiedlichem Arbeitsdruck, insbesondere drei Druckminderer mit 4, 5 und 6 bar Arbeits- bzw. Ausgangsdruck oder einen Proportionaldruclcregler auf, an dem elektronisch angesteuert ebenfalls mehrere unterschiedliche Arbeitsdrücke eingestellt werden, insbesondere in Anpassung an das jeweils abgespeicherte Aufheiz- und Pressprogramm. Dadurch kann eine vordefinierte Anpassung des Pressdruckes an unterschiedliche Muffelgrössen erzielt werden. In vorteilhafter Weise sind die

Druckminderer mit der elektronischen Steuerung gekoppelt, insbesondere über Drucksensoren, so dass der Vielzahl möglicher Aufheiz- und Pressverläufe der jeweils passende Ausgangs- oder Arbeitsdruck am Presszylinder zugeordnet werden kann. Hierdurch lässt sich ein Großteil der auftretenden Bedienungsfehler weitgehend ausschließen, so dass das Pressergebnis erheblich verbessert werden kann und insbesondere Muffelplatzer weitgehend vermieden werden. Dies ist bei Dentaltechniköfen von wesentlicher Bedeutung, da ansonsten das Arbeitsergebnis von vielen Stunden zerstört oder unwiederbringlich beschädigt werden kann.

Weiterhin lassen sich auch die Druckminderer als Modul vormontieren und als eine Baueinheit befestigen, wobei bevorzugt ein Schacht für die Pneumatikleitungen vorgesehen ist. Dabei lassen sich die unterschiedlichen Druckbereiche von beispielsweise 4, 5 und 6 bar Ausgangsdruck auch noch einstellen, beispielsweise für unterschiedliche Muffeln, die ein Zahntechniker bevorzugt einsetzt. Die unterschiedlich dimensionierten Muffelgrössen und darin eingesetzte Zahnanzahl lässt sich ebenfalls vorprogrammieren, um dann den empfohlenen Ausgangsdruck mittels Sensoren zu überwachen. Diese Drucksensoren lassen sich besonders einfach durch Einstecken in die vorstehend erwähnten Schächte montieren. Zudem können an einer bevorzugt stranggepressten Führungssäule mehrere Nuten vorgeformt sein, in die Sensoren von oben her einfachst eingesteckt werden können. Durch derartige Schächte am oberen Ende der Führungssäule können die Pneumatikleitungen auch geschützt zum oben auf der Brennkammer aufgesetzten Pneumatikzylinder geführt werden.

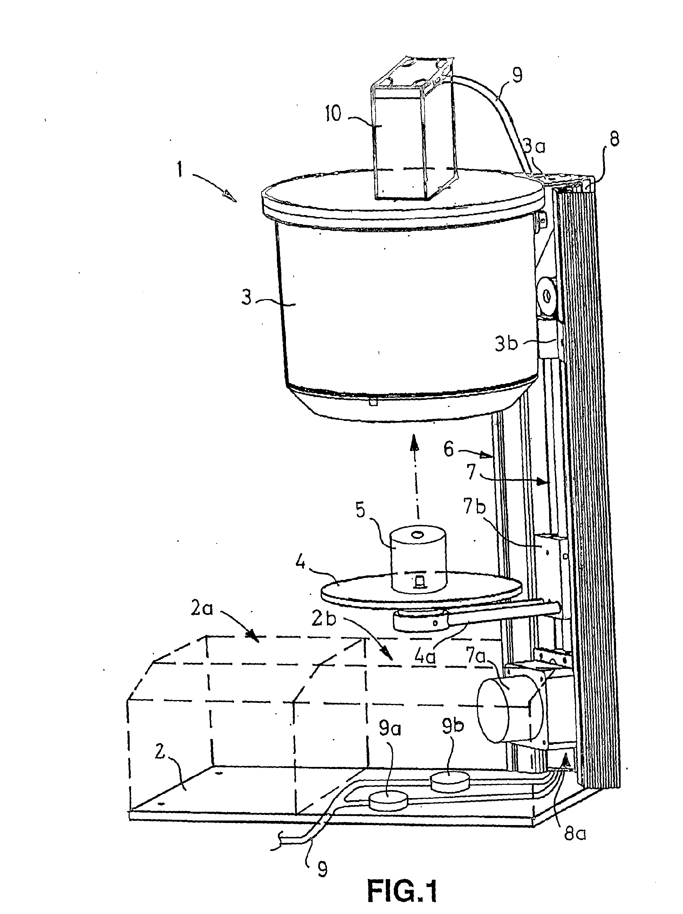

Nachfolgend wird die Erfindung anhand der Zeichnung näher erläutert und beschrieben, wobei die (einzige) Fig. 1 eine Perspektivansicht eines erfindungsgemäßen Dentaltechnikofens zeigt.

In Fig. 1 ist ein Dentaltechnikofen 1 dargestellt, dessen grundsätzlicher Aufbau nachfolgend kurz beschrieben wird. Dieser weist zum einen eine Abstützbasis 2 auf an der eine Führungssäule 6 befestigt ist und in zwei Abteilen 2a, 2b ein nicht näher dargestelltes Pneumatik-/Elektronik-Steuerteil aufgebaut ist. Zum anderen ist am oberen Ende der Führungssäule 6 eine Brennkammer 3 befestigt, in der eine Muffel 5 mittels einer Heizwicklung auf mehrere Hundert Grad aufgeheizt werden kann. Die jeweilige Temperatur hängt vom verpressten bzw. vergossenen Material für die Zahnprothese ab, wobei die Muffel 5 mit einem Hohlraum für ein Zahnmodell auf einer Bodenplatte 4 abgestellt ist und mittels eines Antriebes 7 nach oben verfahrbar ist, so dass dann für den Heizbetrieb die Bodenplatte 4 die Brennkammer 3 unten verschließt. Hierzu ist die Bodenplatte 4 auf einen Kragarm 4a aufgesetzt, der an einem von einem Antriebsmotor 7a beweglichen Schlitten 7b des Antriebes 7 befestigt ist.

Die durch die Heizwicklung und einen aufgesetzten Pneumatikzylinder 10 relativ schwere Brennkammer 3 ist hier mittels einer Aufhängung 3a oben in die Führungssäule 6 eingehängt, genauer in einem oben offenen Schacht 8, sowie am Umfang mit Halterungsteilen 3b an der Führungssäule 6 sicher befestigt. Die Halterungsteile 3b werden dabei an Nuten an der Führungssäule 6 befestigt. Wesentlich beim Aufbau der Führungssäule 6 als Strangpressprofil ist die Möglichkeit, wenigstens einen Schacht 8 darin auszubilden, bevorzugt jedoch mehrere Schächte 8. lnsbesondere sind hier drei derartiger Schächte 8 in der Führungssäule 6 gebildet, wobei in dem unteren Bereich der Schächte 8 zu dem nicht näher dargestellten Steuerteil auf der Abstützbasis 2 hin Auslassschlitze 8a vorgesehen sein, durch die hindurch z.B. ein Kabelbaum vom Steuerteil ausgehend zur Brennkammer 3 geführt ist sowie Pneumatikleitungen 9 zum Pneumatikzylinder 10. In die Haupt-Pneumatikleitung 9 mit dem Labordruck von beispielsweise 10 bar sind hier zwei Druckminderer 9a und 9b zwischengeschaltet, die den Systemdruck auf einen Ausgangsdruck von z.B. 5 bar am Druckminderer 9a und 6 bar am Druckminderer 9b reduzieren.

Aus Fig. 1 ergibt sich auch die Gestaltung des Strangpressprofils und die stabile Befestigung des Antriebes 7. Die beiden seitlichen Schächte 8 dienen insbesondere zur Aufnahme von Verkabelungen oder Pneumatikleitungen. In den beim Strangpressen weiterhin zugleich eingearbeiteten Nuten benachbart zum Antrieb 7 können Sensoren geführt werden, um die Ausgangsdrücke der Druckminderer 9a, 9b, also der gewünschten Arbeitsdrücke am Presszylinder 10 zu überwachen. Entsprechendes gilt für einen alternativ vorgesehenen Proportionaldruckregler, mit dem nicht nur mehrere Arbeitsdrücke einstellbar sind, sondern stufenlos eine Vielzahl, so dass beispielsweise auch Zwischendruckbereiche von 4,7 bar, 4,8 bar, 4,9 bar usw. in Anpassung an die jeweiligen, abgespeicherten Verfahrensparameter elektronisch angesteuert werden können.

## Patentansprüche

1. Dentaltechnikofen zur Herstellung von Presskeramik, mit einer haubenförmigen Brennkammer, in die eine Muffel einbringbar und die im Betrieb durch eine Bodenplatte verschlossen ist, wobei auf der Brennkammer ein Pneumatikzylinder gelagert ist, dessen Arbeitsdruck über einen Druckminderer einstellbar ist,
**dadurch gekennzeichnet, dass**
wenigstens zwei Druckminderer (9a, 9b) mit jeweils unterschiedlichem Arbeitsdruck vorgesehen sind oder der Druckminderer als Proportionaldruckregler mit elektronisch ansteuerbaren, unterschiedlichen Arbeitsdrücken ausgebildet ist.

2. Dentaltechnikofen nach Anspruch 1, **dadurch gekennzeichnet, dass** die Druckminderer (9a, 9b) auf einer plattenförmigen Abstützbasis (2) angeordnet sind.

3. Dentaltechnikofen nach Anspruch 2, **dadurch gekennzeichnet, dass** auf der Abstützbasis (2) ein pneumatisches und/oder elektronisches Steuerteil vorgesehen ist, dessen Leitungen (9) und/oder Verkabelungen von unten her in den wenigstens einen Schacht (8) in einer Führungssäule (6) eingeführt sind.

4. Dentaltechnikofen nach einem der Ansprüche 1 bis 3, **dadurch gekennzeichnet, dass** drei Druckminderer (9a, 9b, ...) vorgesehen sind, die jeweils insbesondere einen Arbeitsdruck von 4, 5 und 6 bar bereitstellen.

5. Dentaltechnikofen nach Anspruch 4, **dadurch gekennzeichnet, dass** der Eingangs- bzw. Systemdruck in der Pneumatik-Leitung (9) etwa 10 bar beträgt.

6. Dentaltechnikofen nach einem der Ansprüche 1 bis 5, **dadurch gekennzeichnet, dass** die Führungssäule (6) zumindest zwei Schächte (8) aufweist, wobei Leitungen (9) zum Pneumatikzylinder (10) und Elektrokabel voneinander getrennt geführt sind.

7. Dentaltechnikofen nach einem der Ansprüche 1 bis 6, **dadurch gekennzeichnet, dass** die Brennkammer (3) am oberen Ende der Führungssäule (6) eingehängt ist.

8. Dentaltechnikofen nach einem der Ansprüche 1 bis 7, **dadurch gekennzeichnet, dass** die Pneumatik-Leitungen (9) von Drucksensoren überwacht sind, die mit einem elektronischen Steuerteil verbunden sind.

9. Dentaltechnikofen nach einem der Ansprüche 1 bis 8, **dadurch gekennzeichnet, dass** die Druckminderer (9a, 9b, ...) oder der Proportionaldruckregler mit einer Programmeinheit, insbesondere einer Speicherkarte, gekoppelt sind, in der verschiedene Aufheiz- und/oder Pressabläufe abgespeichert sind.

10. Dentaltechnikofen nach einem der Ansprüche 1 bis 9, **dadurch gekennzeichnet, dass** im oberen/unteren Bereich eines Schachtes (8) Auslassschlitze (8a) für Leitungen oder Kabel vorgesehen sind.

## Claims

1. A dental furnace for producing compacted ceramics, comprising a hood-shaped firing chamber into which a muffle can be inserted and which is closed in operation by a bottom plate, with a pneumatic cylinder being mounted on the firing chamber whose working pressure can be set by means of a pressure reducer,
**characterized in that**
at least two pressure reducers (9a, 9b) are each provided with different working pressure or the pressure reducer is provided in the form of a proportional pressure regulator with electronically controllable different working pressures.

2. A dental furnace according to claim 1, **characterized in that** the pressure reducers (9a, 9b) are arranged on a plate-like support basis (2).

3. A dental furnace according to claim 2, **characterized in that** a pneumatic and/or electronic control unit is provided on the support basis (2) whose lines (9) and/or cabling is introduced from below into the at least one duct (8) in a guide column (6).

4. A dental furnace according to one of the claims 1 to 3, **characterized in that** three pressure reducers (9a, 9b, ...) are provided which each provide a working pressure of 4, 5 and 6 bar in particular.

5. A dental furnace according to claim 4, **characterized in that** the input or system pressure in the pneumatic line (9) is approximately 10 bar.

6. A dental furnace according to one of the claims 1 to 5, **characterized in that** the guide column (6) comprises at least two ducts (8), with lines (9) to the pneumatic cylinder (10) and electric cables being guided separated from another.

7. A dental furnace according to one of the claims 1 to 6, **characterized in that** the firing chamber (3) is suspended at the upper end of the guide column (6).

8. A dental furnace according to one of the claims 1 to 7, **characterized in that** the pneumatic lines (9) are monitored by pressure sensors which are connected with an electronic control unit.

9. A dental furnace according to one of the claims 1 to 8, **characterized in that** the pressure reducers (9a, 9b, ...) or the proportional pressure regulator are coupled with a program unit, especially a memory card, in which different heating and/or compacting processes are stored.

10. A dental furnace according to one of the claims 1 to 9, **characterized in that** outlet slots (8a) for lines or cables are provided in the upper/lower region of a duct (8).

## Revendications

1. Four de technique dentaire pour la production de céramique compactée, comprenant une chambre de combustion en forme de calotte dans laquelle un moufle peut être introduit et qui est fermée en fonctionnement par une plaque de fond, un vérin pneumatique dont la pression de travail est réglable par un réducteur de pression étant monté sur la chambre de combustion,
**caractérisé par le fait**
**qu'**il est prévu au moins deux réducteurs de pression (9a, 9b) avec des pressions de travail différentes ou que le réducteur de pression est conçu comme régulateur de pression proportionnel avec des pressions de travail différentes commandables électroniquement.

2. Four de technique dentaire selon la revendication 1, **caractérisé par le fait que** les réducteurs de pression (9a, 9b) sont disposés sur une base d'appui (2) en forme de plaque.

3. Four de technique dentaire selon la revendication 2, **caractérisé par le fait qu'**il est prévu sur la base d'appui (2) un organe de commande pneumatique et/ou électronique dont les lignes (9) et/ou les câblages sont introduits par le bas dans au moins un puits (8) dans une colonne de guidage (6).

4. Four de technique dentaire selon l'une des revendications 1 à 3, **caractérisé par le fait qu'**il est prévu trois réducteurs de pression (9a, 9b, ...) qui fournissent respectivement en particulier une pression de travail de 4, 5 et 6 bars.

5. Four de technique dentaire selon la revendication 4, **caractérisé par le fait que** la pression d'entrée ou de système dans la ligne pneumatique (9) est d'environ 10 bars.

6. Four de technique dentaire selon l'une des revendications 1 à 5, **caractérisé par le fait que** la colonne de guidage (6) présente au moins deux puits (8), des lignes (9) allant au vérin pneumatique (10) et des câbles électriques cheminant séparément les uns des autres.

7. Four de technique dentaire selon l'une des revendications 1 à 6, **caractérisé par le fait que** la chambre de combustion (3) est accrochée à l'extrémité supérieure de la colonne de guidage (6).

8. Four de technique dentaire selon l'une des revendications 1 à 7, **caractérisé par le fait que** les lignes pneumatiques (9) sont surveillées par des capteurs de pression qui sont reliés à un organe de commande électronique.

9. Four de technique dentaire selon l'une des revendications 1 à 8, **caractérisé par le fait que** les réducteurs de pression (9a, 9b, ...) ou le régulateur de pression proportionnel sont couplés à une unité de programme, en particulier une carte mémoire dans laquelle différents cycles de chauffage et de compression sont enregistrés.

10. Four de technique dentaire selon l'une des revendications 1 à 9, **caractérisé par le fait qu'**il est prévu des fentes de sortie (8a) pour des lignes ou des câbles dans la partie supérieure/inférieure d'un puits (8).
